# EUROPÄISCHE PATENTSCHRIFT

(11) **EP 3 401 020 B1**
(45) Veröffentlichungstag und Bekanntmachung des Hinweises auf die Patenterteilung: **05.08.2020**
(21) Anmeldenummer: 18171582.2
(22) Anmeldetag: 09.05.2018
(51) Int. Cl.: B05B 12/00, G05D 16/00

(54) **MATERIALDRUCKREGLER**
MATERIAL PRESSURE CONTROLLER
RÉGULATEUR DE PRESSION DES MATÉRIAUX

(30) Priorität: 12.05.2017 DE 102017110430
(43) Veröffentlichungstag der Anmeldung: 14.11.2018
(73) Patentinhaber: Timmer GmbH, 48485 Neuenkirchen (DE)
(72) Erfinder: Timmer, Herbert, 48485 Neuenkirchen (DE)
(74) Vertreter: Dr. Träger & Strautmann PAe PartG mbB

(56) Entgegenhaltungen:
- DD-A1- 204 979
- DE-A1- 19 854 620
- DE-T2- 69 817 238
- US-A1- 2005 006 617

## Beschreibung

Die Erfindung betrifft einen Materialdruckregler, insbesondere Gegendruckregler, gemäß dem Oberbegriff des Anspruchs 1. Siehe hierzu auch DD204979. Ein Verteilen fließfähiger beziehungsweise fluider Medien, wie Flüssigkeiten oder Gasen, erfolgt in einer Vielzahl unterschiedlicher Anwendungen. Dabei sind diese Medien entweder selber das auszubringende Material oder dienen zum Transport eines solchen, beispielsweise als Emulsion. Beispielsweise kann durch Versprühen eine Farbe oder ein Lack auf ein zu beschichtendes Werkstück aufgebracht werden.

Ein Beschichten mit dem Medium, wie beispielsweise einer Farbe, erfolgt typischerweise mittels durch Versprühen mittels Spritzdüsen. Zur Zuführung des Mediums zur Spritzdüse als Abnehmer sind üblicherweise unter einem Druck stehende Leitungen vorgesehen, die die jeweilige Spritzdüsen mit dem Medium versorgen. Um eine sichere Zuführung zu ermöglichen, wird in der Regel ein aus einem Reservoir gespeister Druckkreislauf eingerichtet. In diesem Druckkreislauf kann das Medium unter Druck umgepumpt werden, um gegebenenfalls über die Spritzdüsen abgegeben zu werden.

Sobald allerdings durch einen oder mehrere der Abnehmer, also konkret eine oder mehrere Spritzdüsen, ein Teil des Mediums aus dem Kreislauf entnommen wird, sinkt der Druck des Mediums darin ab. Damit sinkt insbesondere aber auch die Austrittsgeschwindigkeit aus der Düse beziehungsweise den Düsen, so dass sich die Verteilungscharakteristik in unerwünschter Weise ändert.

Materialdruckregler können gerade dazu dienen, den Druck im System aufrechtzuerhalten beziehungsweise konstant zu halten. Dabei handelt es sich insbesondere um einen vorgegebenen oder auch einstellbaren Druck. Der Materialdruckregler weist dazu eine Druckkammer auf, deren Volumen beziehungsweise Querschnitt variabel ist. So kann der Druck am Eingang der Druckkammer eingestellt werden. Dies wird mittels eines Gegendrucks zum Druck des Mediums erreicht, der durch Beaufschlagung mit einem Druckmedium, wie üblicherweise Pressluft, eingestellt wird.

Dieses Druckmedium stellt einen Gegendruck zum Druck des Mediums dar. Hierdurch lässt sich der Querschnitt der Druckkammer über bewegliche Wandabschnitte in Abhängigkeit vom Druckverhältnis einstellen. Sinkt der Druck des Mediums am Eingang des Kreislaufs gegenüber dem Gegendruck, wird der Querschnitt der Druckkammer reduziert, so dass der Druck wieder ansteigt. So kann er konstant gehalten werden.

Aus DE 198 54 620 A1 ist eine Ventileinrichtung bekannt, die ein als Schaltwippe 13 ausgeführtes Schaltelement enthält. An den beidseitig des Schwenkbereichs 15 der Schaltwippe 13 liegenden Wippenarmen 18, 18' greift jeweils eine Betätigungsmembran 35, 35' an. Je nach Stellung der Schaltwippe 13 wird der Druck in einem Verbraucher A entweder erhöht oder verringert. Weder Schaltwippe 13 noch die Betätigungsmembranen 35, 35' bilden jedoch eine Druckkammer aus. Schaltwippe 13 und Betätigungsmembranen 35, 35' dienen lediglich dazu die Mündung eines jeweils zugeordneten Fluidkanals zu verschließen oder freizugeben.

Nachteilig an der in DE 198 54 620 A1 beschriebenen Ventileinrichtung ist, dass ein Regelverhalten, mit möglichst geringer Regelabweichung bei vorgegebenem Druck am Hauptsteuerkanal nicht realisierbar ist. Die Membranen sind lediglich als Betätigungsmembranen zur Erzeugung unterschiedlicher Schaltzustände geeignet. (SP.6, Z.34 bis 40). Die Anordnung eignet sich daher lediglich zur Realisierung eines Ventils, nicht aber zur Realisierung eines Druckreglers.

Aus DE 698 17 238 T2 ist ein Rücksaugventil bekannt, mit dem das Tropfen von Flüssigkeit durch Rücksaugen einer bestimmten Menge von durch den Fluiddurchgang fließenden Fluids verhindert wird, indem eine Membran verschoben wird, wobei auch die angesaugte Menge der Flüssigkeit stabilisiert wird. Zwar ist ein Ein/Ausschaltventil 42 mit einer elastischen Verschlussmembran vorgesehen, welches von einer zweiten Membran 78 geöffnet wird, diese zweite Membran dient jedoch ausschließlich dazu, Fluid zurückzusaugen und so das Nachtropfen der Düse zu verhindern. Die Zweite Membran ist somit nicht zur Regulation eines Druckniveaus vorgesehen und bildet auch keine Druckkammer aus.

Die Anordnung eignet sich daher lediglich zur Realisierung eines Ventils mit den beiden Schaltzuständen OFFEN und GESCHLOSSEN, nicht aber zur Realisierung eines Druckreglers.

Nachteilig an den bekannten Materialdruckreglern ist, dass die Druckkammer einen komplizierten Durchleitungsweg für das Medium zur Aufrechterhaltung der Drucks aufweist. Damit wird das Medium starken Scherbeanspruchungen ausgesetzt, was sich insbesondere bei Fluiden wie Lacken negativ auf die Qualität des Mediums auswirkt. Darüber hinaus führen bei den bekannten Lösungen Querschnittsänderungen im Regelbetrieb zu weiteren Asymmetrien der Strömung und damit zu zusätzlichen Scherbeanspruchungen des Mediums.

Es ist eine der Erfindung zugrundeliegende Aufgabe, diese Nachteile zu überwinden. Insbesondere soll der Durchleitungsweg durch den Materialdruckregler vereinfacht werden.

Ein Materialdruckregler mit den Merkmalen des Anspruchs 1 löst diese Aufgabe. Der Materialdruckregler dient dabei zur Regelung des Drucks eines fließfähigen beziehungsweise fluiden Mediums. Bei dem Medium kann es sich insbesondere um Flüssigkeiten und/oder Gase handeln. Beispielsweise bei Spritzanlagen handelt es sich dabei insbesondere um Farben oder Lacke, also vorzugsweise Mischungen, wie Emulsionen einer Flüssigkeit mit Feststoffpartikeln. Vorzugsweise soll der Druck des Mediums konstant gehalten werden, insbesondere gegenüber einem Referenzdruck. Dazu ist eine von einem Einlass zu einem Auslass vom Medium durchströmbare Druckkammer vorgesehen, wobei der Querschnitt der Druckkammer variabel ist zur Einstellung des Drucks am Einlass der Druckkammer mittels eines Gegendrucks über die Wandung der Druckkammer. Der Materialdruckregler zeichnet sich dadurch aus, dass die Wandung der Druckkammer aus mehreren beweglichen Abschnitten gebildet ist. Damit kann die Druckkammer erfindungsgemäß im Hinblick auf eine verbesserte Durchleitung des Mediums optimiert werden.

Vorzugsweise ist die Wandung aus mehreren, vorzugsweise zwei, unabhängig voneinander beweglichen und/oder gegenüberliegend angeordneten Wandabschnitten gebildet. Damit kann erreicht werden, dass die Druckkammer optimal einstellbar ist.

Die flexible Wandung ist insbesondere als wenigstens eine Membran ausgebildet. Vorzugsweise ist sie als Membran mit mehreren Membranabschnitten ausgebildet oder ist aus mehreren Membranen zusammengesetzt. Damit kann einerseits eine einteilige, vorzugsweise einstückige Membran vorgesehen sein. Andererseits kann die Wandung aus mehreren Membranabschnitten zusammengesetzt sein.

Der Wandung ist insbesondere wenigstens ein Kolben zugeordnet. Vorzugsweise ist einzelnen Wandabschnitten jeweils ein Kolben zugeordnet. Die Wandung beziehungsweise der jeweilige Wandabschnitt ist besonders bevorzugt mittels des jeweiligen Kolbens beweglich und/oder abstützbar ausgebildet.

Vorzugsweise sind die Wandabschnitte und/oder Kolben symmetrisch zur Druckkammer angeordnet. Damit wird ein symmetrischer Aufbau der Druckkammer ermöglicht. Die Druckkammer ist damit für einen optimierten Materialdurchfluss ausgebildet.

Die Wandabschnitte sind insbesondere aus flexiblem Material gebildet, wobei die Druckkammer vorzugsweise vollständig von flexiblem Material umgeben ist. Durch ein flexibles Material wird erreicht, dass die Wand zur Einstellung des Volumens der Druckkammer beweglich ist.

Bevorzugt ist der wenigstens eine Kolben zur Einstellung des Gegendrucks für den Druck in der Ventilkammer mit einem fluiden Druckmedium, insbesondere Pressluft, beaufschlagbar. Der Kolben dient damit als Übersetzerkolben, also zur Weitergabe eines höheren Drucks als das Druckmedium an das Medium in der Druckkammer. Durch die unterschiedlichen Flächen des Übersetzerkolbens kann ein erhöhter Gegendruck aufgebaut werden. Die größere Fläche zum Druckmedium sorgt für erhöhten Druck an der kleineren Fläche zur Druckkammer hin.

Vorzugsweise bilden zwei gegenüberliegend angeordnete Wandabschnitte, insbesondere Membranen, die flexible Wandung der Ventilkammer aus. Damit lässt sich die Druckkammer aus zwei Membranen zusammensetzen. Die Membranen liegen vorzugsweise randseitig flach aufeinander auf zur Ausbildung der zentralen Druckkammer. So kann die Druckkammer auf einfache Weise aus zwei Membranen zusammengesetzt werden.

Wenigstens eine weitere äußere Druckmembran ist insbesondere zur räumlichen Abtrennung zwischen Druckmedium und Kolben vorgesehen. Vorzugsweise dient dazu eine Druckmembran je Kolben beziehungsweise ein Druckmembranabschnitt je Kolben. Damit kann die Beaufschlagung des jeweiligen Kolbens mit dem Druckmedium verbessert werden. Der Druck kann damit als Gegendruck auf den Kolben einwirken, ohne dass es zu Verlusten kommt.

Die Druckkammer weist vorzugsweise einen zumindest im Wesentlichen linearen und/oder symmetrischen Durchströmungbereich auf. Zumindest ist im Bereich zwischen Einlass und Auslass der Druckkammer der Fall. Durch eine geradlinige beziehungsweise lineare Durchströmung wird ein optimaler, materialschonender Materialfluss sichergestellt.

Insbesondere wirken mehrere unabhängig voneinander bewegliche und/oder gegenläufig bewegliche Wandabschnitte beziehungsweise Membranabschnitte zur Ausbildung der Druckkammer zusammen. Damit kann eine optimale Einstellbarkeit der Druckkammer erreicht werden.

Die Wandabschnitte und/oder Membranen der Druckkammer sind insbesondere gegenüberliegend angeordnet. Vorzugsweise sind die Wandabschnitte und/oder Membranen und/oder Kolben entgegengesetzt arbeitend angeordnet. Gegeneinander arbeitende Membranen beziehungsweise Kolben dienen dazu, die Druckkammer optimal einzustellen.

Vorzugsweise wird der Gegendruck mittels eines elastischen Fluids erzeugt. Dazu dient insbesondere ein Gas und/oder eine Flüssigkeit. Das Fluid wirkt hierzu vorzugsweise auf den Kolben ein. Diese Lösung schließt insbesondere die Verwendung von Pressluft ein. Es können aber auch andere, vorzugsweise kompressible Fluide verwendet werden.

Der Gegendruck kann auch mittels eines elastischen Festkörpers hergestellt beziehungsweise eingestellt werden. Hierzu kann insbesondere wenigstens eine Feder oder auch ein anderer kompressibler Festkörper dienen, wie Gummi oder ähnliches. Der Gegendruck ist dabei vorzugsweise durch Vorspannung und/oder Einstellung der Federkonstante des elastischen Festkörpers einstellbar. Der Festkörper, also insbesondere auch die Feder, wirkt vorzugsweise auf den Kolben ein. So wird der Gegendruck erzeugt.

Ein bevorzugtes Ausführungsbeispiel der Erfindung wird im Folgenden anhand der Zeichnungen näher beschrieben. In dieser zeigen:

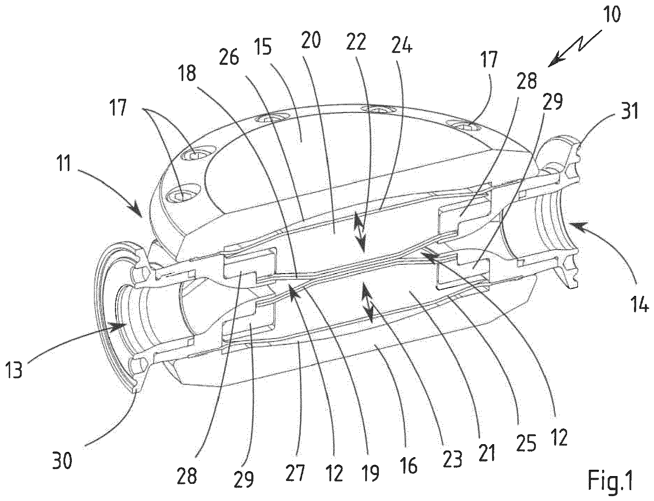

Fig. 1 einen Schnitt durch einen erfindungsgemäßen Materialdruckregler.

In der Fig. 1 ist eine Schnittansicht eines erfindungsgemäßen Materialdruckreglers 10 gezeigt.

Dessen Gehäuse 11 beinhaltet im Innern eine Druckkammer 12. Ein Einlass 13 und ein Auslass 14 dienen zur Zuführung beziehungsweise zur Abgabe eines durch die Druckkammer 12 transportierbaren fließfähigen beziehungsweise fluiden Mediums. Das Medium selber ist hier nicht dargestellt.

Das Gehäuse 11 wird in der Zeichnung oben und unten durch jeweils einen Deckel 15 und 16 begrenzt. Diese Deckel 15 und 16 sind mittels Schrauben 17 mit dem übrigen Gehäuse 11 verschraubt. Damit kann die Abdichtung des Gehäuses 11 gegenüber der Umgebung sichergestellt werden.

Die Druckkammer 12 als solche wird durch zwei Membranen 18 und 19 begrenzt. Diese Membranen 18 und 19 liegen teilweise unmittelbar aneinander an, nämlich abgesehen vom Bereich des Einlasses 13 und Auslasses 14 im Wesentlichen randseitig. Im Zentrum der Druckkammer 12 ist ein im Wesentlichen schlauchförmiger Bereich zur Durchleitung des Mediums ausgeformt. Dieser erstreckt sich vom Einlass 13 zum Auslass 14. So kann eine nahezu lineare Durchleitung durch die Druckkammer 12 erfolgen.

Die beiden Membranen 18 und 19 werden durch Kolben 20 beziehungsweise 21 kontaktiert. Die Kolben 20 und 21 dienen dazu, einen Gegendruck zum Druck des Mediums im Innern der Druckkammer 12 aufzubauen.

Die Kolben sind beweglich gelagert, nämlich in Richtung der in der Zeichnung eingetragenen Doppelpfeile für die jeweilige Bewegungsrichtung 22 beziehungsweise 23 der Kolben 20 beziehungsweise 21. Damit wird erreicht, dass der Abstand der Membranen 18 und 19 und damit das Volumen der Druckkammer 12 variiert werden kann. Bewegen sich die Kolben 18 und 19 auseinander, so wird das Volumen der Druckkammer 12 größer. Bewegen sich die Kolben 18 und 19 aufeinander zu, so wird das Volumen der Druckkammer 12 entsprechend kleiner.

Die Kolben 20 und 21 sind mit jeweils einer weiteren Druckmembran 24 beziehungsweise 25 versehen. Die Druckmembranen 24 und 25 begrenzen jeweils einen Druckraum 26 beziehungsweise 27 gegenüber dem jeweiligen Deckel 15 beziehungsweise 16. Dieser Druckraum 26 und 27 dienen zur Beaufschlagung mit einem hier nicht gezeigten Druckmedium, wie insbesondere Pressluft. Damit kann ein Gegendruck auf die Kolben 20 und 21 aufgebaut werden, der entgegen dem Druck des Mediums in der Druckkammer 12 wirkt.

Seitlich umlaufend sind diese Druckmembranen 24 und 25 am Gehäuse 11 eingespannt. Die Einspannung erfolgt zwischen dem jeweiligen Deckel 15 beziehungsweise 16 und dem eigentlichen Gehäuse 11. Währenddessen sind die Membranen 18 und 19 hier auch seitlich umlaufend am Gehäuse 11 eingespannt. In diesem Fall erfolgt die Einspannung aber zwischen einem Membranhalteelement 28 beziehungsweise 29, beispielsweise in Form eines kreisförmigen Spannrings, und dem eigentlichen Gehäuse 11. Damit sind die Membranen 18, 19, 24, 25 jeweils sicher und abdichtend gehalten.

Tatsächlich ist der Kolben 20 insgesamt von der Membran 18 und der Druckmembran 24 umgeben. Gleiches gilt für den Kolben 21 mit der Membran 19 und der Druckmembran 25. Dies sorgt dafür, dass einerseits eine Abdichtung der Druckkammer 12 gegen einen Austritt des Mediums erfolgt. Außerdem sorgt die Druckmembran 24 beziehungsweise 25 aber auch dafür, dass das Druckmedium nicht ungewollt entweichen kann.

Da die Membranen 18 und 19 wie auch die Druckmembranen 24 und 25 jeweils aus flexiblem Material bestehen, sorgt diese Lagerung der Kolben 20 und 21 jeweils dazwischen dafür, dass die Kolben elastisch gelagert sind. Die Membranen 18 und 19 wie auch 24 und 25 sorgen damit für eine Federwirkung auf die Kolben 20 und 21. Dabei ist eine Neutralstellung in Abhängigkeit von der Anordnung der Membranen 18, 19, 24, 25 wie auch der Kolben 20 und 21 vorgesehen. Im vorliegenden Fall ist die druckbeaufschlagte Stellung bei aneinander anliegenden Membranen 18 und 19 und damit an diesen anliegenden Kolben 21 und 21 vorgesehen, also wie dies in der Fig. 1 gezeigt ist.

Bei einer Durchleitung von Material in Form des Mediums durch die Druckkammer 12 vom Einlass 13 zum Auslass 14 werden die Membranen 18 und 19 und damit die Kolben 20 und 21 in gleicher Weise nach oben beziehungsweise nach unten auseinanderbewegt. Dabei arbeitet der Druck des Mediums gegen den Gegendruck auf die Kolben 20 und 21 an.

Beim erfindungsgemäßen Einsatz beispielsweise in einem hier nicht im Detail gezeigten Farbsprühsystem wird der Materialdruckregler 10 einerseits mit einer Zuleitung eines unter Druck stehenden Mediums, wie insbesondere einer Farbe oder einem Lack, versehen. Das Medium wird dazu aus einem Reservoir in Richtung des Materialdruckreglers 10 gepumpt.

Diese Zuleitung kann dann beispielsweise mittels eines Flansches 30 am Einlass 13 befestigt werden. Der Auslass 14 des Materialdruckreglers 10 kann dann entsprechend beispielsweise mittels eines Flansches 31 mit einer Ableitung für den Rücklauf des Mediums verbunden werden. Ein Rücklauf fördert das nicht aus den Düsen abgegebenen Medium wieder zurück in Richtung eines Reservoirs. So wird ein Kreislauf gebildet.

Sobald nun ein Teil des Mediums durch eine Düse aus dem System abgegeben wird, sinkt folglich der Druck am Einlass 13. Der Gegendruck in den Druckräumen 26 und 27 sorgt dann dafür, dass sich die Kolben 20 und 21 aufeinander zu bewegen, so dass es zu einer entsprechenden Verkleinerung des Volumens und damit des Querschnitts der Druckkammer 12 kommt. Dies sorgt für eine Erhöhung des Drucks in der Druckkammer 12 bis wieder ein Gleichgewicht mit dem Gegendruck hergestellt ist. Falls zusätzlich noch eine weitere Düse geöffnet wird, erfolgt eine weitere Nachsteuerung der Kolben 20 und 21. Der Druck kann so aufrechterhalten werden.

Sobald nur noch eine geringere Menge des Mediums abgefordert wird, beispielsweise durch Schließen einer oder aller Düsen, steuert der Materialdruckregler 10 ebenfalls entsprechend nach. Der Druck in der Druckkammer 12 steigt, so dass die Kolben 20 und 12 gegen den Gegendruck nach außen bewegt werden. So sinkt der Druck in der Druckkammer 12 entsprechend ab.

Die Druckräume 26 und 27 für die beiden Kolben 20 und 21 werden typischerweise mit dem gleichen Druck beaufschlagt. Hierzu dient typischerweise eine Pressluftversorgung.

Alternativ kann eine andere Federwirkung vorgesehen sein. Beispielsweise können mechanische Federn, wie insbesondere vorgespannte Federn (Druck- oder Zugfedern) eingesetzt werden. Eine Einstellbarkeit der Federspannung beispielsweise des Federwegs, sorgt für eine Einstellbarkeit des Gegendrucks.

Der Druck kann auf diese Weise in jedem Fall extern so eingestellt werden, dass sich immer optimale Druckverhältnisse einstellen, unabhängig von der Abforderung durch die Düsen der Spritzpistolen oder anderer Abnehmer für das Medium.

Da die beiden Kolben 20 und 21 und die zugehörigen Membranen 18, 19, 24, 25 identisch oder zumindest sehr ähnlich ausgebildet sind, erfolgt eine gleichmäßige, insbesondere symmetrische Verstellung zum jeweiligen Ausgleich des Gegendrucks. Damit wird der Druckraum 12 in symmetrischer Weise vergrößert beziehungsweise auch wieder verkleinert.

### Bezugszeichenliste:

- 10: Materialdruckregler
- 11: Gehäuse
- 12: Druckkammer
- 13: Einlass
- 14: Auslass
- 15: Deckel
- 16: Deckel
- 17: Schraube
- 18: Membran
- 19: Membran
- 20: Kolben
- 21: Kolben
- 22: Bewegungsrichtung
- 23: Bewegungsrichtung
- 24: Druckmembran
- 25: Druckmembran
- 26: Druckraum
- 27: Druckraum
- 28: Membranhalteelement
- 29: Membranhalteelement
- 30: Flansch
- 31: Flansch

## Patentansprüche

1. Materialdruckregler, vorzugsweise Gegendruckregler, zur Regelung des Drucks eines fließfähigen Mediums, insbesondere einer Flüssigkeit und/oder eines Gases, mit einer von einem Einlass (13) zu einem Auslass (14) vom Medium durchströmbaren Druckkammer (12), wobei der Querschnitt der Druckkammer (12) variabel ist zur Einstellung des Drucks am Einlass (13) der Druckkammer (12) mittels eines Gegendrucks über die Wandung der Druckkammer (12), **dadurch gekennzeichnet, dass** die Wandung der Druckkammer (12) aus mehreren beweglichen Abschnitten gebildet ist.

2. Materialdruckregler nach Anspruch 1, **dadurch gekennzeichnet, dass** die Wandung aus mehreren, vorzugsweise zwei, unabhängig voneinander beweglichen und/oder gegenüberliegend angeordneten Wandabschnitten gebildet ist.

3. Materialdruckregler nach Anspruch 1, **dadurch gekennzeichnet, dass** die flexible Wandung als wenigstens eine Membran (18, 19) ausgebildet ist, vorzugsweise einer Membran (18, 19) mit mehreren Membranabschnitten oder mehreren zusammengesetzten Membranen (18, 19).

4. Materialdruckregler nach einem der vorhergehenden Ansprüche, **dadurch gekennzeichnet, dass** der Wandung wenigstens ein Kolben (20, 21) zugeordnet ist, vorzugsweise einzelnen Wandabschnitten jeweils ein Kolben (20, 21), wobei die Wandung beziehungsweise der jeweilige Wandabschnitt mittels des jeweiligen Kolbens (20, 21) beweglich und/oder abstützbar ausgebildet ist.

5. Materialdruckregler nach einem der vorhergehenden Ansprüche, **dadurch gekennzeichnet, dass** die Wandabschnitte und/oder Kolben (20, 21) symmetrisch zur Druckkammer (12) angeordnet sind.

6. Materialdruckregler nach einem der vorhergehenden Ansprüche, **dadurch gekennzeichnet, dass** die Wandabschnitte aus flexiblem Material gebildet sind, wobei die Druckkammer (12) vorzugsweise vollständig von flexiblem Material umgeben ist.

7. Materialdruckregler nach einem der vorhergehenden Ansprüche, **dadurch gekennzeichnet, dass** der wenigstens eine Kolben zur Einstellung des Gegendrucks für den Druck in der Druckkammer (12) mit einem fluiden Druckmedium, insbesondere Pressluft, beaufschlagbar ist.

8. Materialdruckregler nach einem der vorhergehenden Ansprüche, **dadurch gekennzeichnet, dass** zwei gegenüberliegend angeordnete Wandabschnitte, insbesondere Membranen (18, 19), die flexible Wandung der Druckkammer (12) ausbilden, wobei die Membranen (18, 19) vorzugsweise randseitig flach aufeinander aufliegen zur Ausbildung der zentralen Druckkammer (12).

9. Materialdruckregler nach einem der vorhergehenden Ansprüche, **dadurch gekennzeichnet, dass** wenigstens eine weitere äußere Druckmembran (23, 24) zur räumlichen Abtrennung zwischen Druckmedium und Kolben (20, 21) vorgesehen ist, vorzugsweise eine Druckmembran (23, 24) je Kolben (20, 21) beziehungsweise ein Druckmembranabschnitt je Kolben (20, 21).

10. Materialdruckregler nach einem der vorhergehenden Ansprüche, **dadurch gekennzeichnet, dass** die Druckkammer (12) einen zumindest im Wesentlichen linearen und/oder symmetrischer Durchströmungsbereich aufweist, zumindest im Bereich zwischen Einlass (13) und Auslass (14) der Druckkammer (12).

11. Materialdruckregler nach einem der vorhergehenden Ansprüche, **dadurch gekennzeichnet, dass** mehrere unabhängig voneinander bewegliche und/oder gegenläufig bewegliche Wandabschnitte beziehungsweise Membranabschnitte zur Ausbildung der Druckkammer (12) zusammenwirken.

12. Materialdruckregler nach einem der vorhergehenden Ansprüche, **dadurch gekennzeichnet, dass** die Wandabschnitte und/oder Membranen (18, 19) gegenüberliegend angeordnet sind, wobei die Wandabschnitte und/oder Membranen (18, 19) und/oder Kolben (20, 21) entgegengesetzt arbeitend angeordnet sind.

13. Materialdruckregler nach einem der vorhergehenden Ansprüche, **dadurch gekennzeichnet, dass** der Gegendruck mittels eines elastischen Fluids erzeugt wird, insbesondere mittels eines Gases und/oder einer Flüssigkeit, wobei das Fluid vorzugsweise auf den Kolben (20, 21) einwirkt.

14. Materialdruckregler nach einem der vorhergehenden Ansprüche, **dadurch gekennzeichnet, dass** der Gegendruck mittels eines elastischen Festkörpers hergestellt wird, insbesondere mittels wenigstens einer Feder, wobei der Gegendruck durch Vorspannung und/oder Einstellung der Federkonstante einstellbar ist, wobei der Festkörper vorzugsweise auf den Kolben (20, 21) einwirkt.

## Claims

1. A material pressure regulator, preferably a counter pressure regulator, for regulating the pressure of a flowable medium, in particular a liquid and/or a gas, having a pressure chamber (12) through which the medium can flow from an inlet (13) to an outlet (14), wherein the cross-section of the pressure chamber (12) is variable in order to set the pressure at the inlet (13) of the pressure chamber (12) by means of a counter pressure across the wall of the pressure chamber (12), **characterized in that** the wall of the pressure chamber (12) is formed by a plurality of moveable sections.

2. The material pressure regulator as claimed in claim 1, **characterized in that** the wall is formed by a plurality, preferably two, wall sections that can be moved independently of each other and/or are arranged opposite one another.

3. The material pressure regulator as claimed in claim 1, **characterized in that** the flexible wall is realized as at least one membrane (18, 19), preferably a membrane (18, 19) having a plurality of membrane sections or a plurality of composite membranes (18, 19).

4. The material pressure regulator as claimed in one of the preceding claims, **characterized in that** at least one piston (20, 21) is assigned to the wall, preferably one piston to each individual wall section, wherein the wall or the respective wall section is configured to be moveable and/or supportable by means of the respective piston (20, 21).

5. The material pressure regulator as claimed in one of the preceding claims, **characterized in that** the wall sections and/or pistons (20, 21) are arranged symmetrically to the pressure chamber (12).

6. The material pressure regulator as claimed in one of the preceding claims, **characterized in that** the wall sections are formed from flexible material, wherein the pressure chamber (12) is preferably completely surrounded by flexible material.

7. The material pressure regulator as claimed in one of the preceding claims, **characterized in that** the at least one piston can be acted upon by a fluid pressure medium, in particular compressed air, for adjusting the counter pressure for the pressure in the pressure chamber (12).

8. The material pressure regulator as claimed in one of the preceding claims, **characterized in that** two oppositely arranged wall sections, in particular membranes (18, 19), form the flexible wall of the pressure chamber (12), wherein the membranes (18, 19) preferably rest flat on one another at the edges to form the central pressure chamber (12).

9. The material pressure regulator as claimed in one of the preceding claims, **characterized in that** at least one further outer pressure membrane (23, 24) is provided for spatial separation between pressure medium and piston (20, 21), preferably one pressure membrane (23, 24) per piston (20, 21) or one pressure membrane section per piston (20, 21).

10. The material pressure regulator as claimed in one of the preceding claims, **characterized in that** the pressure chamber (12) has an at least substantially linear and/or symmetrical flow area, at least in the region between the inlet (13) and outlet (14) of the pressure chamber (12).

11. The material pressure regulator as claimed in one of the preceding claims, **characterized in that** a plurality of wall sections or membrane sections which can move independently of one another and/or can move in opposite directions interact to form the pressure chamber (12).

12. The material pressure regulator as claimed in one of the preceding claims, **characterized in that** the wall sections and/or membranes (18, 19) are disposed opposite one another, wherein the wall sections and/or membranes (18, 19) and/or pistons (20, 21) are arranged to operate in opposite directions.

13. The material pressure regulator as claimed in one of the preceding claims, **characterized in that** the counter pressure is generated by means of an elastic fluid, in particular by means of a gas and/or liquid, wherein the fluid preferably acts on the piston (20, 21).

14. The material pressure regulator as claimed in one of the preceding claims, **characterized in that** the counter pressure is produced by means of an elastic solid body, in particular by means of at least one spring, wherein the counter pressure can be adjusted by pretensioning and/or adjusting the spring constant, wherein the solid body preferably acts on the piston (20, 21).

## Revendications

1. Régulateur de pression de matière, de préférence régulateur de contre-pression, servant à la régulation de la pression d'un milieu coulant, en particulier d'un liquide et/ou d'un gaz, comportant une chambre de pression (12) pouvant être traversée par le milieu à partir d'une entrée (13) jusqu'à une sortie (14), dans lequel la section transversale de la chambre de pression (12) est variable pour le réglage de la pression à l'entrée (13) de la chambre de pression (12) au moyen d'une contre-pression sur la paroi de la chambre de pression (12), **caractérisé en ce que** la paroi de la chambre de pression (12) est formée à partir de plusieurs parties mobiles.

2. Régulateur de pression de matière selon la revendication 1, **caractérisé en ce que** la paroi est formée à partir de plusieurs, de préférence deux, parties de paroi mobiles indépendamment les unes des autres et/ou disposées en regard.

3. Régulateur de pression de matière selon la revendication 1, **caractérisé en ce que** la paroi souple est réalisée sous la forme d'au moins une membrane (18, 19), de préférence d'une membrane (18, 19) dotée de plusieurs parties de membrane ou de plusieurs membranes (18, 19) en plusieurs parties.

4. Régulateur de pression de matière selon l'une des revendications précédentes, **caractérisé en ce qu'au** moins un piston (20, 21) est associé à la paroi, de préférence à chaque fois un piston (20, 21) est associé à des parties de paroi individuelles, la paroi ou la partie de paroi respective étant réalisée de manière mobile et/ou de manière à pouvoir être supportée au moyen du piston respectif (20, 21).

5. Régulateur de pression de matière selon l'une des revendications précédentes, **caractérisé en ce que** les parties de paroi et/ou pistons (20, 21) sont disposés symétriquement par rapport à la chambre de pression (12).

6. Régulateur de pression de matière selon l'une des revendications précédentes, **caractérisé en ce que** les parties de paroi sont formées à partir d'un matériau souple, la chambre de pression (12) étant entourée de préférence complètement par le matériau souple.

7. Régulateur de pression de matière selon l'une des revendications précédentes, **caractérisé en ce que** l'au moins un piston peut être soumis à l'action d'un milieu sous pression fluide, en particulier d'un air comprimé, pour le réglage de la contre-pression pour la pression dans la chambre de pression (12).

8. Régulateur de pression de matière selon l'une des revendications précédentes, **caractérisé en ce que** deux parties de paroi disposées en regard, en particulier des membranes (18, 19), forment la paroi souple de la chambre de pression (12), les membranes (18, 19) reposant de préférence à plat l'une sur l'autre du côté des bords pour former la chambre de pression centrale (12).

9. Régulateur de pression de matière selon l'une des revendications précédentes, **caractérisé en ce qu'au** moins une autre membrane de pression extérieure (23, 24) est prévue pour la séparation spatiale entre le milieu sous pression et un piston (20, 21), de préférence une membrane de pression (23, 24) pour chaque piston (20, 21) ou une partie de membrane de pression pour chaque piston (20, 21).

10. Régulateur de pression de matière selon l'une des revendications précédentes, **caractérisé en ce que** la chambre de pression (12) comprend une région d'écoulement au moins sensiblement linéaire et/ou symétrique, au moins dans la région entre l'entrée (13) et la sortie (14) de la chambre de pression (12).

11. Régulateur de pression de matière selon l'une des revendications précédentes, **caractérisé en ce que** plusieurs parties de paroi ou parties de membrane mobiles indépendamment les unes des autres et/ou mobiles en sens contraires coopèrent pour la formation de la chambre de pression (12).

12. Régulateur de pression de matière selon l'une des revendications précédentes, **caractérisé en ce que** les parties de paroi et/ou membranes (18, 19) sont disposées en regard, les parties de paroi et/ou membranes (18, 19) et/ou pistons (20, 21) étant disposés de manière à travailler de manière opposée.

13. Régulateur de pression de matière selon l'une des revendications précédentes, **caractérisé en ce que** la contre-pression est produite au moyen d'un fluide élastique, en particulier au moyen d'un gaz et/ou d'un liquide, le fluide agissant de préférence sur le piston (20, 21).

14. Régulateur de pression de matière selon l'une des revendications précédentes, **caractérisé en ce que** la contre-pression est produite au moyen d'un corps solide élastique, en particulier au moyen d'un ressort, la contre-pression pouvant être réglée par précontrainte et/ou réglage de la constante de ressort, le corps solide agissant de préférence sur le piston (20, 21).
